# EUROPÄISCHE PATENTSCHRIFT

(11) **EP 1 291 348 B1**
(45) Veröffentlichungstag und Bekanntmachung des Hinweises auf die Patenterteilung: **03.03.2004**
(21) Anmeldenummer: 02015241.9
(22) Anmeldetag: 09.07.2002
(51) Int. Cl.: C07F 7/08, C07F 7/20

(54) **Verfahren zur Behandlung von Aminosilanverfärbungen**
Treatment process for the bleaching of aminosilanes
Procédé de traitement pour la décoloration d'aminosilanes

(30) Priorität: 05.09.2001 DE 10143568
(43) Veröffentlichungstag der Anmeldung: 12.03.2003
(73) Patentinhaber: Degussa AG, 40474 Düsseldorf (DE)
(72) Erfinder: Jenkner, Peter, Dr., 79618 Rheinfelden (DE)

(56) Entgegenhaltungen:
- EP-A- 0 464 819
- EP-A- 0 702 017
- DE-A- 2 521 399
- US-A- 4 234 502
- PATENT ABSTRACTS OF JAPAN vol. 005, no. 180 (C-079), 19. November 1981 (1981-11-19) & JP 56 104891 A (TORAY IND INC), 20. August 1981 (1981-08-20)

## Beschreibung

Die Erfindung betrifft ein Verfahren zur Behandlung einer Verfärbung eines Aminosilans, wobei das Aminosilan durch Umsetzen eines Chloralkylsilans mit Ammoniak oder einem organischen Amin erhältlich ist und einen Gehalt an Base aufweist, der auf einen Neutralisationsschritt von z. B. hydrolysierbarem Chlorid zurückgeht und die Verfärbung durch eine Oxidation bedingt ist.

Organofunktionelle Silane sind von großem wirtschaftlichen Interesse und umfassen heute eine Vielzahl technischer Anwendungsgebiete.

Insbesondere 3-Chlorpropylchlorsilane sind wichtige Zwischenprodukte bei der Herstellung organofunktioneller Silane. Sie werden in der Regel durch Hydrosilylierung von Allylchlorid hergestellt. Aus 3-Chlorpropyl-trichlorsilan bzw. 3-Chlorpropyl-methyl-dichlorsilan kann man beispielsweise 3-Chlorpropyl-trialkoxysilane, 3-Chlorpropyl-methyl-dialkoxysilane sowie 3-Aminopropyl-trialkoxysilane, wie 3-Aminpropyl-trimethoxysilan (AMMO) oder 3-Aminopropyl-triethoxysilan (AMEO), 3-Aminopropyl-methyl-dialkoxysilane, N-Aminoethyl-3-aminopropyl-trialkoxysilane, wie N-Aminoethyl-3-aminopropyl-trimethoxysilan (DAMO), N-Aminoethyl-3-aminopropylmethyl-dialkoxysilane, 2-Aminoethyl-2-N'-aminoethyl-3-N-aminopropyltrialkoxysilan, um nur einige Beispiele zu nennen, in an sich bekannter Weise herstellen. Dabei können die Aminosilane als hochreine Produkte oder als technische Qualitäten vorliegen. So enthalten technische Qualitäten beispielsweise auch oligomere Aminosilananteile. Der Begriff Aminosilane beinhaltet somit auch Gemische aus gleichen oder verschiedenen monomeren Aminoalkoxysilanen sowie deren Oligomeren und Polymeren in Gewichtsanteilen von 0,5:99,5 bis 99,5: 0,5. Weiterhin können in den besagten technischen Qualitäten der Aminosilane so genannte Bis-Aminosilane vorliegen.

Ferner weisen Aminosilane, die in oben beschriebener Weise erhalten werden, in der Regel noch einen unerwünschten Gehalt an hydrolysierbarem sowie nicht hydrolysierbarem Chlorid auf. Dabei wird das hydrolysierbare Chlorid auch als acides Chlorid bezeichnet.

Auch wird bei Aminosilanen häufig eine Verfärbung beobachtet, wodurch die Qualität gemindert und die Einsatzmöglichkeit für solche Produkte beschränkt wird. Solche Verfärbungen können beispielsweise durch Photooxidation entstehen.

Aus DE-A 25 21 399 ist eine Verfahren zur Herstellung von Aminoalkylsilanen bekannt, wobei ein Halogenalkylsilan mit überschüssigem Ammoniak umgesetzt wird und dem bei der Aminierung entstandenen Gemisch nach der Filtration eine der im Gemisch enthaltenen Chlorid-Menge äquivalente Menge Metallalkoholat, das man gegebenenfalls in Alkohol gelöst verwendet, beispielsweise Natriummethylat in Methanol, zugesetzt wird. Dabei kann man im betrieblichen Alltag leicht übertitrieren, sodass im Produkt ein Überschuss an Base verbleibt.

EP-A 0 702 017 lehrt hydrolysierbares Chlorid aus Aminoorganosilanen durch eine gezielte, unterstöchiometrische Arbeitsweise unter Verwendung eines Metallalkoxids und einer produktschonenden Arbeitstemperatur zu entfernen.

Zur Neutralisation von acidem Chlorid in Aminosilanen kann man aber auch andere basische Verbindungen einsetzen, beispielsweise Alkali- oder Erdalkalimetall, Alkalioder Erdalkalihydroxide, Alkali- oder Erdalkalicarbonate, saure oder neutrale oder basische Salze (EP-A 0 464 819), Metalloxide, Tonerde, um nur einige Beispiele zu nennen.

Der vorliegenden Erfindung lag die Aufgabe zugrunde, eine Möglichkeit bereitzustellen, um die Verfärbung von Aminosilanen zu mindern.

Die gestellte Aufgabe wird erfindungsgemäß entsprechend den Angaben der Patentansprüche gelöst.

Überraschenderweise wurde gefunden, dass man ein bereits verfärbtes Aminosilan, wobei das Aminosilan durch Umsetzen eines Chloralkylsilans mit Ammoniak oder einem organischen Amin erhältlich ist und einen Gehalt einer freien Base, wie Alkalialkoholat, Alkali- oder Erdalkalihydroxid, beispielsweise - aber nicht ausschließlich - Natriummethylat, Kaliumethylat, Natriumhydroxid, Kaliumhydroxid oder Magnesiumhydroxid, aufweist, der auf eine Neutralisation von hydrolysierbarem, d. h. acidem Chlorid im Produkt mit einer - wie auch immer - eingesetzten freien Base, insbesondere einer Alkaliverbindung, zurückgeht und die Verfärbung durch eine Oxidation bedingt ist, insbesondere - wie gefunden wurde - durch Photooxidation in Gegenwart hinreichender Mengen Sauerstoff, in einfacher und wirtschaftlicher Weise entfärben kann, wenn man das Aminosilan mit acidem Chlorid, beispielsweise Chlorwasserstoff, Ammoniumchlorid oder Trimethylchlorsilam, versetzt, sodass ein Überschuss an acidem Chorid im Aminosilan zu verzeichnen ist, man den überschüssigen Anteil an acidem Chlorid in einem oder mehren Schritten mit einem unterschüssigen Anteil einer freien Base, beispielsweise einem Alkalialkoxid, neutralisiert, das dabei entstehende Salz abtrennt, wobei vorzugsweise ein Gehalt an acidem Chlorid von > 6 Gew.-ppm, insbesondere ein Gehalt zwischen der Nachweisgrenze für acides Chlorid und < 50 Gew.-ppm im Produkt verbleibt, d. h. dass nach der Neutralisation keine freie Base im Produkt vorliegt, gegebenenfalls vorliegenden freien Alkohol abdestilliert und das Aminosilan mit UV-haltigem Licht bestrahlt. Geeigneterweise führt man das erfindungsgemäße Verfahren unter Schutzgas durch, wobei das Schutzgas weniger als 5000 Gew.-ppm Sauerstoff, vorzugsweise 0,001 bis 4000 Gew.-ppm Sauerstoff, enthält. Bevorzugt lagert man ein erfindungsgemäß behandeltes Produkt unter Ausschluss von Sauerstoff, beispielsweise unter einer Schutzgasabdeckung oben genannter Spezifikation. Bevorzugt setzt man als Schutzgas entsprechenden Stickstoff oder Argon ein.

Gegenstand der vorliegenden Erfindung ist daher ein Verfahren zur Behandlung einer Verfärbung eines Aminosilans, wobei das Aminosilan durch Umsetzen eines Chlororganosilans mit Ammoniak oder einem organischen Amin erhältlich ist und einen Gehalt einer. freien Base aufweist, der auf eine Neutralisation von acidem Chlorid zurückgeht, das dadurch gekennzeichnet ist, dass man das Aminosilan mit acidem Chlorid versetzt, sodass ein Überschuss an acidem Chorid im Aminosilan zu verzeichnen ist, man den überschüssigen Anteil an acidem Chlorid in einem oder mehren Schritten mit einem unterschüssigen Anteil einer freien Base neutralisiert, das Salz abtrennt und das Aminosilan mit UV-haltigem Licht bestrahlt.

Beim erfindungsgemäßen Verfahren setzt man als Base bevorzugt Alkalialkoholat, Alkalihydroxid oder Alkalicarbonat ein. Die Base kann dabei als Feststoff, beispielsweise pulverförmig, dispergiert oder gelöst, beispielsweise in einem wasserlöslichen organischen Lösemittel wie Dimethylformamid (DMF), Tetrahydrofuran (THF), Alkohol, Aldehyd, Keton oder einer Mischung daraus, eingesetzt werden.

Bevorzugt führt man die Behandlung, d. h. die Maßnahmen des erfindungsgemäßen Verfahrens bei einer Temperatur im Bereich von 0 bis 100 °C, besonders bevorzugt bei 25 bis 60 °C, ganz besonders bevorzugt bei einer Temperatur im Bereich von 30 bis 40 °C durch.

Weiterhin ist bevorzugt, dass man beim erfindungsgemäßen Verfahren das basenfreie Aminosilan bzw. das hydrolysierbares Chlorid enthaltende Aminosilan bestrahlt und vorzugsweise die für die Bestrahlung verwendete UV-Quelle Licht mit einer Wellenlänge von mindestens 200 nm emittiert. Insbesondere setzt man dabei UV-Quellen mit 500 W bis 2 kW in handelsüblicher Ausführung ein.

Geeigneterweise verwendet man für die Bestrahlung UV-haltiges Licht mit einer Wellenlänge von 200 bis 400 nm, besonders bevorzugt man Licht mit einer Wellenlänge von 250 bis 300 nm, insbesondere Licht mit einer Wellenlänge von 254 nm.

Bevorzugt führt man beim erfindungsgemäßen Verfahren die Bestrahlung bei einer Produkttemperatur von 10 bis 60 °C, insbesondere bei 20 bis 40 °C, über eine Zeit von 2 bis 60 Stunden, vorzugsweise von 4 bis 24 Stunden, durch.

Im Rahmen des erfindungsgemäßen Verfahrens führt man auch die Bestrahlung vorzugsweise unter einer im Wesentlichen sauerstofffreien Schutzgasabdeckung, insbesondere unter Argon oder Stickstoff oben genannter Qualität, durch.

Erfindungsgemäß behandelt man vorzugsweise Aminosilane der allgemeinen Formel I

{R¹R²N(TR³R⁴)ₓ[R³N(TR⁴R⁵)_{y}]_{z}}ₜSi(R⁶)ᵣ (I),

worin R¹ bis R⁵ gleich oder verschieden sind und jeweils für Wasserstoff oder eine C₁- bis C₈-lineare, -cyclische oder -verzweigte Alkylgruppe oder eine Arylgruppe stehen, an deren Enden weitere organofunktionelle Gruppen über 2- bis 6-wertige Elemente, außer Kohlenstoff, gebunden sein können, wobei die Arylgruppe als Heteroatome 2- bis 6-wertige Elemente enthalten kann, R⁶ eine C₁- bis C₁₈-Alkyloder Alkoxygruppe oder eine Siloxygruppe ist, T aus der Reihe der 2- bis 6-wertigen Elemente des PSE stammt, insbesondere C, Si, O oder S, und 1 s y ≤ 20, 1 ≤ x s 20, 0 ≤ z ≤ 20, 1 ≤ t s 3, r = 4-t sind. Ganz besonders bevorzugt setzt man beim erfindungsgemäßen Verfahren als Aminosilane die eingangs genannten Aminoalkylalkoxysilane ein.

Im Allgemeinen führt man das erfindungsgemäße Verfahren derart aus, dass man verfärbtes Aminosilan, beispielsweise mit einer Farbzahl von rd. 15 GARDNER (G), unter Schutzgas, das in der Regel bis auf oben genannte Anteile im Wesentlichen frei von Sauerstoff ist, mit einem aciden Chlorid versetzt, sodass im Produkt geeigneterweise eine deutliche Menge acides Chlorid bis zu einer Menge von ≤ 5000 Gew.-ppm, vorzugsweise s 1000 Gew.-ppm, festzustellen ist. Neutralisiert durch Zugabe einer unterstöchiometrischen Menge an Base, sodass geeigneterweise eine Menge von < 50 Gew.-ppm acidem Chlorid im Produkt vorliegt, und trennt das entstandene Salz ab, beispielsweise durch Filtrieren oder Zentrifugieren. Gegebenenfalls kann man nun vorliegenden freien Alkohol wiederum unter Schutzgas und bei einer möglichst produktschonenden Temperatur, geeigneterweise < 80 °C, aus dem Produkt entfernen, beispielsweise destillativ unter vermindertem Druck. Nachfolgend bestrahlt man das Produkt mit UV-Licht. Das erfindungsgemäße Verfahren kann sowohl kontinuierlich als auch diskontinuierlich durchgeführt werden.

Ein so erfindungsgemäße behandeltes Aminosilan ist eine klare, in der Regel niedrigviskose Flüssigkeit und zeichnet sich durch eine hervorragend niedrige Farbzahl, vorzugsweise < 2 G, insbesondere ≤ 1 G, und einen Chlorid-Wert (acide) von < 50 Gew.-ppm aus.

## Patentansprüche

1. Verfahren zur Behandlung einer Verfärbung eines Aminosilans, wobei das Aminosilan durch Umsetzen eines Chlororganosilans mit Ammoniak oder einem organischen Amin erhältlich ist und einen Gehalt einer freien Base aufweist, der auf eine Neutralisation von acidem Chlorid zurückgeht,
**dadurch gekennzeichnet,**
**dass** man das Aminosilan mit acidem Chlorid versetzt, sodass ein Überschuss an acidem Chorid im Aminosilan zu verzeichnen ist, man den überschüssigen Anteil an acidem Chlorid in einem oder mehren Schritten mit einem unterschüssigen Anteil einer freien Base neutralisiert, das Salz abtrennt und das Aminosilan mit UV-haltigem Licht bestrahlt.

2. Verfahren nach Anspruch 1,
**dadurch gekennzeichnet,**
**dass** man die Behandlung unter Schutzgas durchgeführt, wobei das Schutzgas weniger als 5000 Gew.-ppm Sauerstoff enthält.

3. Verfahren nach Anspruch 2,
**dadurch gekennzeichnet,**
**dass** man als Schutzgas Stickstoff oder Argon einsetzt.

4. Verfahren nach mindestens einem der Ansprüche 1 bis 3,
**dadurch gekennzeichnet,**
**dass** man als Base Alkalialkoholat, Alkalihydroxid oder Alkalicarbonat einsetzt.

5. Verfahren nach mindestens einem der Ansprüche 1 bis 4,
**dadurch gekennzeichnet,**
**dass** die für die Bestrahlung verwendete UV-Quelle Licht mit einer Wellenlänge von mindestens 200 nm emittiert.

6. Verfahren nach einem der Ansprüche 1 bis 5,
**dadurch gekennzeichnet,**
**dass** man eine UV-Quelle mit einer Leistung von 500 W bis 2 kW einsetzt.

7. Verfahren nach mindestens einem der Ansprüche 1 bis 6,
**dadurch gekennzeichnet,**
**dass** man für die Bestrahlung UV-haltiges Licht mit einer Wellenlänge von 200 bis 400 nm verwendet.

8. Verfahren nach mindestens einem der Ansprüche 1 bis 7,
**dadurch gekennzeichnet,**
**dass** man die Bestrahlung bei einer Produkttemperatur von 10 bis 60 °C durchführt.

9. Verfahren nach mindestens einem der Ansprüche 1 bis 8,
**dadurch gekennzeichnet,**
**dass** man die Bestrahlung über 2 bis 60 Stunden durchführt.

10. Verfahren nach mindestens einem der Ansprüche 1 bis 9,
**dadurch gekennzeichnet,**
**dass** man die Behandlung bei einer Temperatur im Bereich von 0 bis 100 °C durchführt.

## Claims

1. A process for treating a discoloration of an aminosilane, the aminosilane being obtainable by reacting a chloroorganosilane with ammonia or an organic amine and having a content of a free base, which discolouration is due to neutralization of an acid chloride, **characterized in that** the process comprises adding acid chloride to the aminosilane so that there is an excess of acid chloride in the aminosilane, neutralizing the excess acid chloride in one or more steps with a deficit of a free base, separating off the salt and irradiating the aminosilane with UV-containing light.

2. A process according to claim 1, **characterized in that** the treatment is carried out under protective gas, the protective gas containing less than 5 000 ppm by weight of oxygen.

3. A process according to claim 2, **characterized in that** the protective gas is nitrogen or argon.

4. A process according to at least one of claims 1 to 3, **characterized in that** the base is an alkali metal alkoxide, alkali metal hydroxide or alkali metal carbonate.

5. A process according to at least one of claims 1 to 4, **characterized in that** the UV source used for the irradiation emits light of a wavelength of at least 200 nm.

6. A process according to one of claims 1 to 5, **characterized in that** a UV source having an output of 500 W to 2 kW is used.

7. A process according to at least one of claims 1 to 6, **characterized in that** UV-containing light of a wavelength of 200 to 400 nm is used for the irradiation.

8. A process according to at least one of claims 1 to 7, **characterized in that** the irradiation is carried out at a product temperature of 10 to 60°C.

9. A process according to at least one of claims 1 to 8, **characterized in that** the irradiation is carried out over 2 to 60 hours.

10. A process according to at least one of claims 1 to 9, **characterized in that** the treatment is carried out at a temperature in the range from 0 to 100°C.

## Revendications

1. Procédé de traitement d'une coloration d'un aminosilane, selon lequel l'aminosilane est obtenu par réaction d'un chloro-organosilane avec l'ammoniac ou avec une amine organique et possède une teneur en base libre qui diminue par neutralisation du chlorure d'acide,
**caractérisé en ce qu'**
on mélange l'aminosilane avec un chlorure acide de façon à manifester un excès de chlorure acide dans l'aminosilane, on neutralise la quantité en excès de chlorure d'acide en une ou plusieurs étapes avec une quantité en défaut d'une base libre, on sépare le sel et on irradie l'aminosilane avec une lumière contenant des UV.

2. Procédé selon la revendication 1,
**caractérisé en ce qu'**
on effectue le traitement sous gaz protecteur dans lequel le gaz protecteur renferme moins de 5000 ppm en poids d'oxygène.

3. Procédé selon la revendication 2,
**caractérisé en ce qu'**
on met en oeuvre comme gaz protecteur de l'azote ou de l'argon.

4. Procédé selon l'une quelconque des revendications 1 à 3,
**caractérisé en ce qu'**
on met en oeuvre en tant que base, un alcoolate de métal alcalin, un hydroxyde de métal alcalin ou un carbonate de métal alcalin.

5. Procédé selon au moins l'une quelconque des revendications 1 à 4,
**caractérisé en ce que**
la source d'UV utilisée pour l'irradiation émet une lumière ayant une longueur d'ondes d'au moins 200 nm.

6. Procédé selon l'une quelconque des revendications 1 à 5,
**caractérisé en ce qu'**
on met en oeuvre une source d'UV ayant une puissance de 500 W à 2 kW.

7. Procédé selon au moins l'une quelconque des revendications 1 à 6,
**caractérisé en ce qu'**
on utilise pour l'irradiation d'une lumière contenant des UV ayant une longueur d'ondes allant de 200 à 400 nm.

8. Procédé selon au moins l'une quelconque des revendications 1 à 7,
**caractérisé en ce qu'**
on effectue l'irradiation à une température de produit de 10 à 60°C.

9. Procédé selon au moins l'une quelconque des revendications 1 à 8,
**caractérisé en ce qu'**
on effectue l'irradiation pendant 2 à 60 heures.

10. Procédé selon au moins l'une quelconque des revendications 1 à 9,
**caractérisé en ce qu'**
on effectue le traitement à une température dans la plage allant de 0 à 100°C.
